# EUROPÄISCHE PATENTANMELDUNG

(11) **EP 4 603 257 A1**
(43) Veröffentlichungstag der Anmeldung: **20.08.2025**
(21) Anmeldenummer: 25151634.0
(22) Anmeldetag: 14.01.2025
(51) Int. Cl.: B29C 48/12, B29C 48/21, B29C 44/24, B29C 44/32, B29C 48/154, E04F 19/04

(54) **PROFILLEISTE UND VERFAHREN ZUR HERSTELLUNG EINER PROFILLEISTE**

(30) Priorität: 14.02.2024 DE 102024104154
(71) Anmelder: Döllken Profiles GmbH, 59199 Bönen (DE)
(72) Erfinder: Ottow, Martin, 45134 Essen (DE); Menke, Oliver, 44879 Bochum (DE)
(74) Vertreter: Andrejewski - Honke Patent- und Rechtsanwälte Partnerschaft mbB

(57) **Zusammenfassung**

Die Erfindung betrifft eine Profilleiste (1), insbesondere eine Sockelleiste, umfassend einen Leistenkern (2) und eine den Leistenkern (2) zumindest bereichsweise umgebende Kunststoffummantelung (3). Die Profileiste zeichnet sich dadurch aus, dass zur Erzeugung einer Oberflächenstruktur die Kunststoffummantelung (3) zumindest bereichsweise aus geschäumtem Kunststoff (4) besteht.

## Beschreibung

Die Erfindung betrifft eine Profilleiste, insbesondere eine Sockelleiste, umfassend einen Leistenkern und eine den Leistenkern zumindest bereichsweise umgebende Kunststoffummantelung. Die Profilleiste kann z. B. als Abschluss an einem Übergang Wand/Boden oder Wand/Decke oder im Bereich einer Arbeitsplatte am Übergang Wand/Arbeitsplatte eingesetzt werden.

Bei der Profilleiste handelt es sich bevorzugt um eine Kernsockelleiste. Der Leistenkern ist bevorzugt aus einem Holzwerkstoff, z. B. aus MDF (Medium Density Fiberboard) oder aus HDF (High Density Fiberboard) gefertigt. Solche Holzwerkstoffkerne lassen sich aus Holzwerkstoff-Platten, z. B. MDF-Platten oder HDF-Platten herstellen. Die Leistenkerne können z. B. einen im Wesentlichen rechteckigen Querschnitt aufweisen. Die Kunststoffummantelung wird z. B. aus thermoplastischem Kunststoff gefertigt, und zwar vorzugsweise durch Extrusion. Der (in der Regel vorgefertigte) Leistenkern kann folglich durch Extrusion zumindest bereichsweise oder auch vollständig von der Kunststoffummantelung umschlossen werden, indem die Kunststoffummantelung auf den Kern extrudiert wird. Zusätzlich können an der Leistenunterseite und/oder der Leistenoberseite Abschlussprofile und/oder Lippen angebracht werden, z. B ebenfalls durch z. B. Extrusion.

Solche Profilleisten, insbesondere Kernsockelleisten, sind aus dem Stand der Technik bekannt. Die DE 200 00 298 U1 beschreibt eine Kernsockelleiste mit einem Werkstoffkern und einer Kunststoffummantelung. Zusätzlich weist diese Kernsockelleiste ein Wandabschlussprofil aus einem weichelastischen Werkstoff auf, um Wandunebenheiten und Bodenunebenheiten bei der Sockelverlegung auszugleichen.

Ferner sind auch aus der DE 202 06 984 U1 sowie der DE 20 2004 011 634 U1 Kernsockelleisten bekannt, die einen Werkstoffkern, eine Kunststoffummantelung sowie Abschlussprofile aufweisen. Die DE 20 2004 011 634 U1 lehrt darüber hinaus, dass die Oberfläche der Kunststoffummantelung genarbt oder geprägt sein kann und eine Holzmaserung oder ein anderes Dekor aufweisen kann.

Weiterhin ist auch aus der DE 80 22 429 U1 eine Sockelleiste mit einem etwa rechteckigen Kern bekannt, die eine Ummantelung sowie Dichtlippen aufweist. Die dort beschriebene Sockelleiste kann zusätzlich mit einem Dekor versehen sein, z. B. durch Dekordruck oder eine Dekorfolie, sodass die Leiste die gewünschte Optik erhält.

Im Übrigen sind aus der Praxis sogenannte "Schaumsockelleisten" bekannt, die aus geschäumtem Kunststoff hergestellt werden.

Die JP 2021-161687 A beschreibt eine Sockelleiste, die einen Kern aus geschäumtem Kunststoff aufweist. Die Sockelleiste wird zusätzlich ummantelt, wobei auf der Rückseite auf eine Beschichtung verzichtet wird, damit der geschäumte Kunststoff des Kerns eine rückseitige Montagefläche mit verbesserter Haftung bilden kann.

Auch die DE 101 17 192 A1, die DE 1 920 534 U und die EP 1 995 273 A2 beschreiben Profilleisten aus geschäumtem Kunststoff.

In der Praxis können Profilleisten der eingangs beschriebenen Art zur Anpassung der Optik an z. B. den Bodenbelag oder die Raumoptik mit einer entsprechenden Oberfläche versehen werden. Strukturierter Oberfläche werden bisher in der Regel im Prägeverfahren erzeugt. Dabei wird die Struktur einer Prägewalze, eines Prägestempel oder einer Folie in die Oberfläche der Profilleiste gedrückt und auf der Oberfläche abgebildet. Bei diesem Verfahren sind die Oberflächentemperatur des Profils, die rheologischen Eigenschaften des Kunststoffs, die Oberflächentemperatur der Prägewalze sowie der Anpressdruck sorgfältig aufeinander abzustimmen. Bei einem solchen Prägeverfahren wird der Kunststoff in gewissem Maße gedehnt und verdrängt. Die Dehnung kann ggf. zur Bildung von Weißbruch im Kunststoff führen kann. Das kann das optische Erscheinungsbild und ggf. auch die mechanischen Eigenschaften der Profilleiste beeinträchtigen. Die Verdrängung des Kunststoffs im Prägeprozess kann dazu führen, dass die gewünschten Dimensionen des Profils bzw. vorgegebene Toleranzen nicht eingehalten werden.

Alternativ ist es aus der Praxis bekannt, strukturierte Oberflächen durch Zugabe von mineralischen oder organischen Additiven zu erreichen, die an der Oberfläche des Profils zu einer Mikrorissbildung führen und so eine matt erscheinende Oberfläche erzeugen. Dieses Verfahren ist stark abhängig von den Strömungsbedingungen des Kunststoffs im Extrusionswerkzeug, den rheologischen Eigenschaften des Kunststoffs, von der Schmelzetemperatur und den Abkühlbedingungen nach Austritt aus dem Extrusionswerkzeug. Weiter wird die gewünschte Farbe des Kunststoffprofils, die durch Verwendung eines Farbmasterbatches, einer Flüssigfarbe oder Pigmentzubereitung erzeugt wird, in der Art beeinflusst, dass eine Farbanpassung erforderlich ist.

Ausgehend von dem bekannten Stand der Technik liegt der Erfindung die Aufgabe zugrunde, eine Profilleiste der eingangs beschriebenen Art zu schaffen, die sich durch eine verbessertes optisches Erscheinungsbild bei gleichzeitig wirtschaftlicher Herstellung und hohe Qualität auszeichnet.

Diese Aufgabe wird bei einer gattungsgemäßen Profilleiste erfindungsgemäß dadurch gelöst, dass zur Erzeugung einer Oberflächenstruktur die Kunststoffummantelung zumindest bereichsweise aus geschäumtem Kunststoff besteht.

Die Erfindung geht dabei von der Erkenntnis aus, dass sich durch strukturierte und folglich raue Oberflächen die gewünschten optischen und ggf. auch haptischen Eigenschaften von Profilleisten erzeugen lassen, z. B. um das optische, insbesondere matte, Erscheinungsbild der Leistenoberfläche an einen entsprechenden Bodenbelag oder Wandbelag anzupassen. Darauf aufbauend hat die Erfindung erkannt, dass sich eine (raue) Oberflächenstruktur der Profilleiste mit guter Qualität auf einfache Weise durch die Verwendung eines geschäumten Kunststoffs für die Ummantelung erzeugen lässt. Damit kann vor allem auf zusätzliche Verarbeitungsschritte, wie z. B. eine Prägung der Oberfläche der Profilleiste, verzichtet werden. Insgesamt lassen sich die durch das nachträgliche Prägen unter Umständen auftretenden Nachteile vermeiden. Auch die in der Praxis im Zusammenhang mit der Zugabe von mineralischen oder organischen Additiven zur Erzeugung einer Oberflächenstruktur können vermieden werden. Insgesamt lassen sich bei besonders wirtschaftlicher Herstellung strukturierte Oberflächen erzeugen, die das gewünschte, optische Erscheinungsbild z. B. einer matten Oberfläche bieten.

Die Profilleiste ist erfindungsgemäß derart konzipiert, dass zumindest ein ausgewählter Bereich der Kunststoffummantelung aus geschäumten Kunststoff besteht und die entsprechende Oberflächenstruktur aufweist. In der Regel ist es vorgesehen, den Leistenkern vollständig mit der Kunststoffummantelung zu umgeben und diese Kunststoffummantelung ist bevorzugt auch vollständig aus geschäumtem Kunststoff hergestellt. Es werden aber auch Ausführungen umfasst, bei denen lediglich ein ausgewählter Bereich der Ummantelung in der beschriebenen Weise geschäumt und dadurch strukturiert wird. Grundsätzlich kann es aus optischen Gründen ausreichen, lediglich einen Teil der Kunststoffummantelung strukturiert auszugestalten, z. B eine (vordere und/oder obere) Sichtseite. Aus Fertigungsgründen ist es jedoch in der Regel vorteilhaft, die gesamte Kunststoffummantelung einheitlich aus geschäumten Kunststoff der beschriebenen Art herzustellen, sodass auch die gesamte Kunststoffummantelung strukturiert ausgebildet sein kann.

Bevorzugt weist die Profilleiste eine im montierten Zustand sichtbare Vorderseite und eine dieser gegenüberliegenden im montierten Zustand nicht-sichtbare Rückseite auf, wobei die Kunststoffummantelung zumindest auf der Vorderseite zumindest bereichsweise aus geschäumtem Kunststoff besteht. Der montierte Zustand beschreibt dabei den Zustand nach der Montage der Profilleiste z. B. am Übergang zwischen einem Boden und einer Wand. Die sichtbare Vorderseite der Profilleiste ist definiert als die dem Raum zugewandte Seite und die nicht-sichtbare Rückseite entspricht der dem Raum abgewandten (verdeckten) Seite der Profilleiste. Ergänzend ist in der Regel eine an die vordere Sichtseite anschließende obere Sichtseite vorgesehen, die ebenfalls in der beschriebenen Weise geschäumt und folglich strukturiert ist.

Der geschäumte Kunststoff wird bevorzugt durch ein Treibmittel geschäumt, d. h. durch Zugabe eines Treibmittels während des Herstellungsprozesses der Ummantelung. Im Rahmen der Erfindung sind sowohl chemische Treibmittel als auch physikalische Treibmittel denkbar. Bevorzugt wird jedoch ein chemisches Treibmittel eingesetzt.

Das chemische Treibmittel umfasst bevorzugt Azodicarbondiamid (ADCA), 2,4,6-Trihydrazinno-1,3,5-triazin, Natriumhydrogencarbonat (NaHCO₃) und/oder Zitronensäure (C₆H₈O₇). Diese Treibmittel können erfindungsgemäß sowohl als einzelnes Treibmittel zu dem Kunststoff für die Kunststoffummantelung zugegeben werden, als auch als Mischung aus zwei oder mehreren dieser Treibmittel, die in angepassten Mischungsverhältnissen gemischt werden. Die Erfindung ist jedoch nicht auf die zuvor genannten chemischen Treibmittel beschränkt, sondern umfasst auch davon abweichende, aus dem Stand der Technik bekannte Treibmittel zum Schäumen von Kunststoffen. Es kann insgesamt auf herkömmliche Treibmittel zurückgegriffen werden, diese werden jedoch erfindungsgemäß nicht zum Schäumen der Leiste selbst bzw. zum Schäumen eines Leistenkerns, sondern zum Schäumen der Ummantelung verwendet.

Bevorzugt wird die Kunststoffummantelung aus einem thermoplastischen Kunststoff bzw. auf Basis eines thermoplastischen Kunststoffs, insbesondere aus einem Polyolefin, z. B. Polypropylen (PP), Polystyrol (PS), Acrylnitril-Butadien-Styrol (ABS) oder Polyvinylchlorid (PVC). Diese thermoplastischen Kunststoffe werden in der beschriebenen Weise geschäumt, z. B. durch Zugabe eines Treibmittels.

Zur Fertigung der Profilleiste ist die Kunststoffummantelung bevorzugt durch Extrusion hergestellt und an dem Leistenkern angeordnet. Der Leistenkern wird im Zuge der Extrusion von der Kunststoffummantelung umgeben, indem die Ummantelung auf den (vorgefertigten) Kern extrudiert wird. Es kann folglich auf einen bekannten und gut etablierten Herstellungsprozess zurückgegriffen werden, der jedoch in der erfindungsgemäßen weise modifiziert wird, indem ein geschäumter Kunststoff verwendet bzw. erzeugt wird.

Nach einem weiteren Vorschlag der Erfindung kann zwischen dem Leistenkern und der Kunststoffummantelung zumindest eine Zwischenschicht angeordnet sein. Bei der Zwischenschicht handelt es sich insbesondere um eine Haftvermittlerschicht, die z. B. (ebenfalls) durch Extrusion hergestellt ist, bevorzugt durch Coextrusion. Die Zwischenschicht dient der Verbesserung der Haftung zwischen dem Leistenkern und der Kunststoffummantelung und kann im Zuge der Extrusion der Kunststoffummantelung an dem Leistenkern zugeführt werden, z. B. durch eine entsprechende Coextrusion.

Bevorzugt ist die Zwischenschicht auf Basis eines Copolymers ausgebildet, z. B. auf Basis eines funktionellen Polyolefins und besonders bevorzugt auf Basis eines Vinylacetats, z. B. Ethylvinylacetat (EVA). Ein funktionelles Polyolefin ist im Rahmen der Erfindung definiert als ein Polyolefin mit einer funktionellen Gruppe, wie z. B. einem Acetyl-Rest.

Der geschäumte Kunststoff (der Kunststoffummantelung) kann eine Oberflächenstruktur aufweisen, die eine Oberflächenrauheit Ra von zumindest oder größer 5 µm besitzt, bevorzugt zumindest oder größer 15 µm, besonders bevorzugt zumindest oder größer 25 µm. Der Rauheitswert Ra kann bei einer erfindungsgemäßen Profilleiste 5 µm bis 300 µm betragen. Insbesondere kann die Kunststoffummantelung bzw. der geschäumte Kunststoff der Kunststoffummantelung eine Oberflächenrauheit Ra von 25 bis 250 µm aufweisen. Damit lassen sich Oberflächen mit einem guten, z. B. matten Erscheinungsbild erzeugen.

Der Leistenkern der Profilleiste ist bevorzugt als Holzwerkstoffkern ausgebildet, z. B. aus MDF (Medium Density Fiberboard) oder aus HDF (High Density Fiberboard). Holzwerkstoffkerne aus MDF oder HDF lassen sich aus Holzwerkstoff-Platten, d. h. MDF-Platten oder HDF-Platten herstellen. Die Leistenkerne weisen bevorzugt eine im Wesentlichen rechteckige Grundform auf.

In einer bevorzugten Weiterbildung der Erfindung umfasst die Profilleiste zumindest ein (lippenartiges) Abschlussprofil, bevorzugt ein Bodenabschlussprofil an der Leistenunterseite und/oder ein Wandabschlussprofil an der Leistenoberseite. Ein solches (z. B flexibles) Bodenabschlussprofil schafft eine abdichtende Verbindung zwischen der Leiste und dem Boden. Entsprechend wird durch ein (z. B flexibles) Wandabschlussprofil ein abdichtender Übergang zwischen der Wand und der Leiste geschaffen. Die Abdichtprofile dienen z. B. der Vermeidung einer Ansammlung von Schmutz und Staub, sodass auf eine zusätzliche Abdichtung durch eine Abdichtmasse verzichtet werden kann. Diese Abschlussprofile sorgen neben der Abdichtung auch dafür, dass Unebenheiten des Bodens oder der Wand ausgeglichen werden. Die Abschlussprofile werden entsprechend an der Kunststoffummantelung angebracht, z. B. im Zuge der Extrusion. Sie können aus dem identischen Material wie die Kunststoffummantelung bestehen (z. B. ebenfalls aus geschäumtem Kunststoff) oder aus einem abweichenden Material, z. B. einem weichelastischen Werkstoff, der sich entsprechend an die Wand oder den Boden anschmiegt. Außerdem kann das Abschlussprofil einteilig an die Kunststoffummantelung angeformt werden oder wiederum selbst aus mehreren Bereichen bzw. Abschnitten bestehen. So ist es im Rahmen der Erfindung denkbar, dass der direkt an die Kunststoffummantelung angeformte Bereich des Abschlussprofiles aus dem (geschäumten) Material der Kunststoffummantelung besteht und ein zusätzlicher Bereich, z. B. die Spitze des Abschlussprofils, der die Abdichtung der Wand oder des Bodens bewirkt, als Dichtlippe aus einem im Vergleich dazu weicheren Material.

Das zumindest eine Abschlussprofil ist bevorzugt durch Extrusion hergestellt und an der Kunststoffummantelung angeordnet. Bevorzugt wird das Abschlussprofil durch Coextrusion hergestellt. Im Zuge der Extrusion können das Abschlussprofil bzw. mehrere Abschlussprofile aus dem gleichen Werkstoff wie die Kunststoffummantelung hergestellt werden und an dieser angeordnet werden, z. B. durch eine Einfachextrusion. Es ist jedoch auch möglich, im Rahmen der Erfindung die Abschlussprofile durch eine Coextrusion zu erzeugen, sodass das Abschlussprofil aus einem anderen Material extrudiert wird als die Kunststoffummantelung. Ferner kann auch im Zuge einer Mehrfachextrusion das Abschlussprofil selbst aus unterschiedlichen Materialien extrudiert werden, z. B. mit einer elastischen Spitze bzw. Dichtlippe aus einem weicheren Material als das Material des übrigen Abschlussprofils.

Ferner wird ein Verfahren zur Herstellung der beschriebenen Profilleiste geschützt. Das erfindungsgemäße Verfahren sieht vor, dass zur Herstellung der Profilleiste ein Leistenkern bereitgestellt und zumindest bereichsweise mit einer Kunststoffummantelung versehen wird, wobei die Kunststoffummantelung zur Erzeugung einer (rauen) Oberflächenstruktur zumindest bereichsweise aus einem geschäumten Kunststoff hergestellt wird.

Bevorzugt wird die Kunststoffummantelung zumindest auf der Vorderseite (d. h. die Sichtseite) sowie optional auf einer oberen Sichtseite der Profilleiste zumindest bereichsweise aus geschäumtem Kunststoff hergestellt. Die Profilleiste weist eine Vorderseite und eine dieser gegenüberliegende Rückseite auf, wobei die Vorderseite der im montierten Zustand sichtbaren Seite und die Rückseite entsprechend der im montierten Zustand nicht-sichtbaren Seite entspricht. Bei der Herstellung der Profilleiste wird zumindest die Vorderseite, d. h. die sichtbare, dem Raum zugewandte Seite (und optional auch eine obere Sichtseite) vollständig oder bereichsweise aus geschäumtem Kunststoff hergestellt. Eine optisch zum Bodenbelag und der Raumgestaltung passende und ästhetische Oberflächenstruktur ist vor allem für den sichtbaren Bereich der Profilleiste gewünscht. Daher wird insbesondere dieser Bereich aus einem geschäumten Kunststoff hergestellt, um die entsprechende (raue) Oberflächenstruktur mit einem matten optischen Erscheinungsbild zu erzeugen. Fertigungstechnisch ist es besonders vorteilhaft, die gesamte Kunststoffummantelung aus demselben Material zu fertigen, sodass bevorzugt für die gesamte Kunststoffummantelung geschäumter Kunststoff eingesetzt wird.

Der geschäumte Kunststoff wird bevorzugt durch Zugabe eines Treibmittels geschäumt. Als Treibmittel können sowohl chemische Treibmittel als auch physikalische Treibmittel eingesetzt werden. Bevorzugt erfolgt die Herstellung der Profilleiste durch die Zugabe eines chemischen Treibmittels.

Bevorzugt umfasst das chemische Treibmittel Azodicarbondiamid (ADCA), 2,4,6-Trihydrazinno-1,3,5-triazin, Natriumhydrogencarbonat (NaHCO₃) und/oder Zitronensäure (C₆H₈O₇) oder eine Mischung dieser chemischen Treibmittel in unterschiedlichen (Mischungs-)Verhältnissen.

Die Kunststoffummantelung wird bevorzugt aus einem thermoplastischen Kunststoff bzw. auf Basis eine thermoplastischen Kunststoffs hergestellt, z. B. Polypropylen (PP), Polystyrol (PS), Acrylnitril-Butadien-Styrol (ABS) oder Polyvinylchlorid (PVC).

Das Verfahren zur Herstellung der Profilleiste sieht bevorzugt vor, dass die Kunststoffummantelung durch Extrusion hergestellt und an dem Leistenkern angeordnet wird. Dazu wird der zuvor gefertigte Leistenkern im Zuge der Extrusion mit der Kunststoffummantelung, aus z. B. einem thermoplastischen Kunststoff, beschichtet.

Für die Herstellung der Kunststoffummantelung, z. B. durch Extrusion, kann eine (pulver- und/oder granulatförmige) Ausgangsmischung (für die Extrusion) umfassend einen thermoplastischem Kunststoff und ein chemisches Treibmittel verwendet werden, wobei der Anteil des chemischen Treibmittels in der Ausgangsmischung zumindest 0,01 Gew.-% beträgt, z. B. zumindest 0,02 Gew.-%, bevorzugt zumindest 0,05 % und/oder der Anteil des chemischen Treibmittels in der Ausgangsmischung maximal 0,5 Gew.-% beträgt, z. B. maximal 0,3 Gew.-%, bevorzugt maximal 0,2 Gew.-% und/oder der Anteil des chemischen Treibmittels in der Ausgangsmischung 0,01 bis 0,5 Gew.-% beträgt, z. B. 0,02 bis 0,3 Gew.-%, bevorzugt 0,05 bis 0,2 Gew.-%.

Dabei hat die Erfindung überraschend erkannt, dass sich besonders gute Ergebnisse erzielen lassen, wenn mit verhältnismäßig geringen Treibmittelmengen gearbeitet wird. Die oben angegebenen Anteile des Treibmittels sind folglich bevorzugt geringer als die bei der Herstellung von Schaumprofilen, z. B. Schaumsockelleisten, bislang üblich.

Die Ausgangsmischung liegt z. B. als Granulat und/oder Pulver vor, das sowohl das (übliche) Ausgangsmaterial für die Kunststoffummantelung selbst, z. B. den thermoplastischen Kunststoff, als auch das Treibmittel enthält. Das Treibmittel kann wiederum als Mischung, z. B. als Granulat und/ oder Pulver, zugegeben werden, das sowohl das Treibmittel selbst, als auch ein Trägermaterial, z. B. einen (thermoplastischen) Träger-Kunststoff, umfasst. Der oben genannte Anteil des chemischen Treibmittels bezieht sich auf das Gesamtgewicht der Ausgangsmischung, die z. B. einem Extruder zur Herstellung der Ummantelung zugeführt und im Extruder aufgeschmolzen wird. Im Zuge des Aufheizens und des daraus resultierenden Aufschmelzens des thermoplastischen Kunststoffes, reagiert das Treibmittel wärmebedingt endotherm und setzt Gase wie z. B. Kohlenstoffdioxid (CO₂) oder Stickstoff (N bzw. N₂) frei. Dadurch wird der Kunststoff geschäumt und es entstehen Poren innerhalb der Kunststoffummantelung, die zu der strukturierten (rauen) Oberfläche mit insbes. mattem Erscheinungsbild führen.

Optional kann die Ausgangsmischung (zusätzlich) ein Nukleierungsmittel umfassen, z. B. unlösliche Metalloxide, unlösliche Metallsalze, Bornitrid, mineralische Füllstoffe, z. B. Talkum, synthetische Kieselsäure oder Kaolin. Dieses wird bei der Herstellung der Kunststoffummantelung, z. B. im Extruder, zusätzlich zugegeben, um die Taktzeiten bei der Kunststoffverarbeitung zu verbessern. Der Einsatz eines Nukleierungsmittels als Additiv erhöht die Keimzahl bei der Kristallisation von Kunststoffen.

Bevorzugt wird während der Herstellung zwischen dem Leistenkern und der Kunststoffummantelung zumindest eine Zwischenschicht der bereits beschriebenen Art angeordnet, insbesondere eine Haftvermittlerschicht, die z. B. durch Extrusion hergestellt wird, bevorzugt durch Coextrusion.

Eine Weiterentwicklung des erfindungsgemäßen Verfahrens sieht vor, dass an der Profilleiste zumindest ein Abschlussprofil angeordnet wird, bevorzugt ein Bodenabschlussprofil an der Leistenunterseite und/oder ein Wandabschlussprofil an der Leistenoberseite. Das zumindest eine Abschlussprofil wird bevorzugt durch Extrusion hergestellt und an der Kunststoffummantelung angeordnet, bevorzugt durch Coextrusion. Sofern für das Abschlussprofil ein unterschiedliches Material (als das der Kunststoffummantelung) genutzt wird, erfolgt die Herstellung durch eine Coextrusion, z. B. eine Zweifachextrusion. Das Abschlussprofil kann auch mehrere unterschiedliche Bereiche aufweisen, z. B. eine weichere Spitze. Die Herstellung erfolgt in diesem Fall im Zuge einer Mehrfachextrusion, z. B. einer Dreifachextrusion.

Im Folgenden wird die Erfindung anhand von lediglich Ausführungsbeispiele darstellenden Zeichnungen näher erläutert. Es zeigen
**Fig.** 1 eine erste Ausführungsform einer erfindungsgemäßen Profilleiste im Querschnitt und
Fig. 2 eine zweite Ausführungsform einer erfindungsgemäßen Profilleiste im Querschnitt.

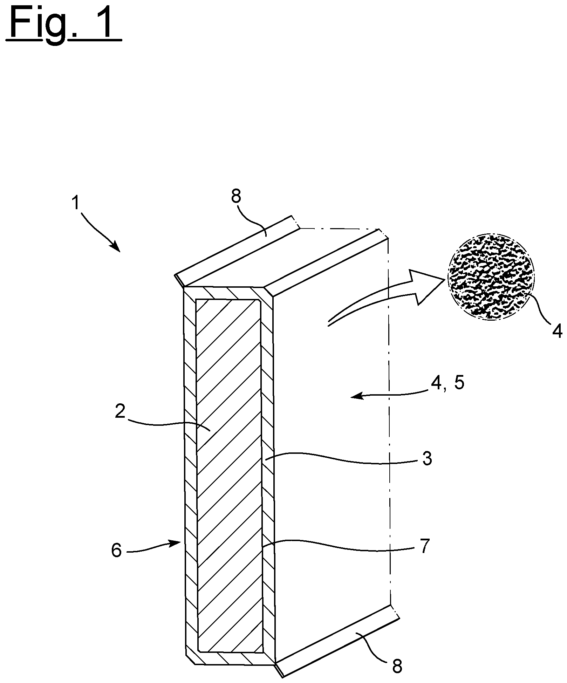

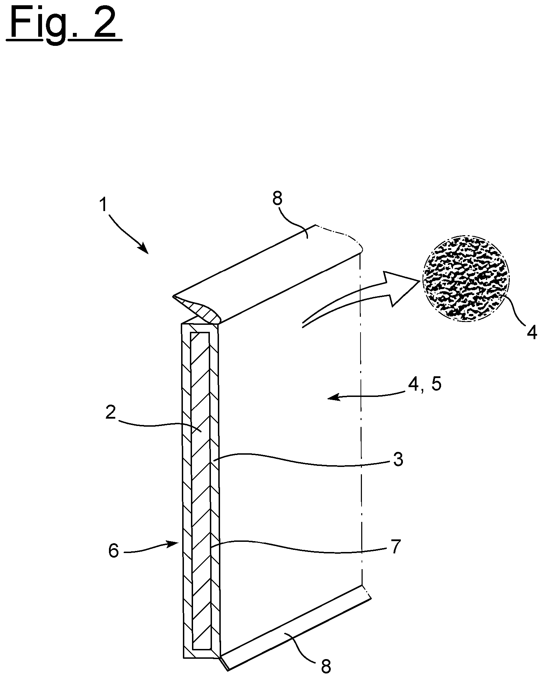

In den Figuren sind beispielhaft zwei Ausführungsformen einer erfindungsgemäßen Profilleiste dargestellt. Insbesondere handelt es sich um Kernsockelleisten. Die Ausführung der Figuren 1 und 2 unterscheiden sich durch eine unterschiedliche Dimensionierung der Leiste sowie durch unterschiedlich ausgebildete Abschlussprofile. Der grundsätzliche, kontruktive Aufbau dieser Leisten ist bekannt.

Die Figuren zeigen jeweils eine Profilleiste 1, die einen Leistenkern 2 sowie eine Kunststoffummantelung 3 aufweist. Der Leistenkern 2, der z. B. aus einem Holzwerkstoffkern bestehen kann, ist in dem Ausführungsbeispiel vollständig von der Kunststoffummantelung 3 umgeben. Die Profilleiste 1 weist eine Vorderseite 5 sowie eine Rückseite 6 auf. Die Vorderseite 5 ist definiert als die im montierten Zustand, z. B. als Sockelleiste an einem Übergang zwischen Boden und Wand, sichtbare Seite, die dem Raum zugewandt ist. Entsprechend handelt es sich bei der Rückseite 6 um die nicht-sichtbare, dem Raum abgewandte Seite, die z. B. der Wand zugeordnet ist und z. B. an der Wand befestigt ist. Zumindest die Vorderseite 5 und ggf. die sichtbare Oberseite, vorzugsweise aber die gesamte Ummantelung besteht aus einem geschäumten Kunststoff 4 und weist dadurch eine raue Oberflächenstruktur mit mattem optischen Erscheinungsbild auf. Die Figuren zeigen jeweils in einer vergrößerten Ansicht eine mögliche Darstellung einer solchen (rauen) Oberflächenstruktur des geschäumten Kunststoffes 4.

Zwischen dem Leistenkern 2 und der Kunststoffummantelung 3 ist in dem Ausführungsbeispiel (optional) eine Zwischenschicht 7 angeordnet, bei der es sich insbesondere um eine Haftvermittlerschicht 7 handelt. Diese besteht z. B. aus Ethylvinylacetat (EVA) und kann im Zuge einer Extrusion, z. B. durch Coextrusion, hergestellt werden und dient der verbesserten Haftung zwischen dem Leistenkern 2 und der Kunststoffummantelung 3. Die Kunststoffummantelung 3 besteht aus einem thermoplastischen Kunststoff, z. B. Polypropylen (PP), Polystyrol (PS), Acrylnitril-Butadien-Styrol (ABS) oder Polyvinylchlorid (PVC), welcher in der beschrieben weise geschäumt ist.

Gemäß Figur 1 ist der Leistenoberseite und der Leistenunterseite jeweils ein Abschlussprofil 8 angeordnet, das ein Wandabschlussprofil bzw. einem Bodenabschlussprofil bildet. Diese sind an der Kunststoffummantelung 3 angeordnet und können im Zuge der Extrusion hergestellt werden. Dabei können die Abschlussprofile 8 durch eine Coextrusion aus einem von der Kunststoffummantelung 3 abweichenden Werkstoff hergestellt sein.

In der Figur 2 ist eine Profilleiste 1 dargestellt, die in ihrem grundsätzlichen Aufbau der Profilleiste 1 der Figur 1 entspricht. Sie weist ebenfalls je ein Abschlussprofil 8 an der Leistenoberseite und der Leistenunterseite auf, diese weisen jedoch gegenüber der Figur 1 eine abweichende Geometrie und zudem ist die Wandabschlussleiste an der Leistenoberseite an einer anderen Position der Kunststoffummantelung 3 angebracht.

## Patentansprüche

1. Profilleiste (1), insbesondere eine Sockelleiste, umfassend einen Leistenkern (2) und eine den Leistenkern (2) zumindest bereichsweise umgebende Kunststoffummantelung (3), **dadurch gekennzeichnet, dass** zur Erzeugung einer Oberflächenstruktur die Kunststoffummantelung (3) zumindest bereichsweise aus geschäumtem Kunststoff (4) besteht.

2. Profilleiste (1) nach Anspruch 1 mit einer im montierten Zustand sichtbaren Vorderseite (5) und eine dieser gegenüberliegenden im montierten Zustand nicht-sichtbaren Rückseite (6), **dadurch gekennzeichnet, dass** die Kunststoffummantelung (3) zumindest auf der Vorderseite (5) zumindest bereichsweise aus geschäumtem Kunststoff (4) besteht.

3. Profilleiste (1) nach einem der Ansprüche 1 oder 2, **dadurch gekennzeichnet, dass** der geschäumte Kunststoff (4) durch ein Treibmittel geschäumt ist, bevorzugt durch ein chemisches Treibmittel.

4. Profilleiste (1) nach Anspruch 3, **dadurch gekennzeichnet, dass** das chemische Treibmittel Azodicarbondiamid (ADCA), 2,4,6-Trihydrazinno-1,3,5-triazin, Natriumhydrogencarbonat (NaHCO₃) und/oder Zitronensäure (C₆H₈O₇) umfasst.

5. Profilleiste (1) nach einem der Ansprüche 1 bis 4, **dadurch gekennzeichnet, dass** die Kunststoffummantelung (3) aus einem thermoplastischem Kunststoff besteht, z. B. Polypropylen (PP), Polystyrol (PS), Acrylnitril-Butadien-Styrol (ABS) oder Polyvinylchlorid (PVC).

6. Profilleiste (1) nach einem der Ansprüche 1 bis 5, **dadurch gekennzeichnet, dass** die Kunststoffummantelung (3) durch Extrusion hergestellt und an dem Leistenkern (2) angeordnet ist.

7. Profilleiste (1) nach einem der Ansprüche 1 bis 6, **dadurch gekennzeichnet, dass** zwischen dem Leistenkern (2) und der Kunststoffummantelung (3) zumindest eine Zwischenschicht (7) angeordnet ist, insbesondere eine Haftvermittlerschicht (7), die z. B. durch Extrusion hergestellt ist, bevorzugt durch Coextrusion.

8. Profilleiste (1) nach Anspruch 7, **dadurch gekennzeichnet, dass** die Zwischenschicht (7) aus einem Copolymer oder auf Basis eines Copolymers ausgebildet ist, bevorzugt aus einem oder auf Basis eines funktionellen Polyolefins, besonders bevorzugt auf Basis eines Vinylacetats, z. B. Ethylvinylacetat (EVA).

9. Profilleiste (1) nach einem der Ansprüche 1 bis 8, **dadurch gekennzeichnet, dass** der geschäumte Kunststoff (4) eine Oberflächenstruktur aufweist, die eine Oberflächenrauheit Ra von zumindest 5 µm besitzt, bevorzugt zumindest 15 µm, besonders bevorzugt zumindest 25 µm.

10. Profilleiste (1) nach einem der Ansprüche 1 bis 9, **dadurch gekennzeichnet, dass** der Leistenkern (2) als Holzwerkstoffkern ausgebildet ist, z. B. aus MDF oder HDF.

11. Profilleiste (1) nach einem der Ansprüche 1 bis 10, **dadurch gekennzeichnet, dass** die Profilleiste (1) zumindest ein Abschlussprofil (8) umfasst, z. B ein Bodenabschlussprofil (8) an der Leistenunterseite und/oder ein Wandabschlussprofil (8) an der Leistenoberseite.

12. Profilleiste (1) nach Anspruch 11, **dadurch gekennzeichnet, dass** das zumindest eine Abschlussprofil (8) durch Extrusion hergestellt und an der Kunststoffummantelung (3) angeordnet ist, bevorzugt durch Coextrusion.

13. Verfahren zur Herstellung einer Profilleiste (1) nach einem der Ansprüche 1 bis 12, wobei ein Leistenkern (2) bereitgestellt und zumindest bereichsweise mit einer Kunststoffummantelung (3) versehen wird, **dadurch gekennzeichnet, dass** die Kunststoffummantelung (3) zur Erzeugung einer Oberflächenstruktur zumindest bereichsweise aus einem geschäumten Kunststoff (4) hergestellt wird.

14. Verfahren nach Anspruch 13, **dadurch gekennzeichnet, dass** die Kunststoffummantelung (3) zumindest auf der Vorderseite (5) der Profilleiste (1) zumindest bereichsweise aus geschäumtem Kunststoff (4) hergestellt wird.

15. Verfahren nach einem der Ansprüche 13 oder 14, **dadurch gekennzeichnet, dass** der geschäumte Kunststoff (4) durch Zugabe eines Treibmittels geschäumt wird, bevorzugt durch Zugabe eines chemischen Treibmittels.

16. Verfahren nach Anspruch 15, **dadurch gekennzeichnet, dass** das chemische Treibmittel Azodicarbondiamid (ADCA), 2,4,6-Trihydrazinno-1,3,5-triazin, Natriumhydrogencarbonat (NaHCO₃) und/oder Zitronensäure (C₆H₈O₇) umfasst.

17. Verfahren nach einem der Ansprüche 13 bis 16, **dadurch gekennzeichnet, dass** die Kunststoffummantelung (3) aus einem thermoplastischem Kunststoff hergestellt wird, z. B. Polypropylen (PP), Polystyrol (PS), Acrylnitril-Butadien-Styrol (ABS) oder Polyvinylchlorid (PVC).

18. Verfahren nach einem der Ansprüche 13 bis 17, **dadurch gekennzeichnet, dass** die Kunststoffummantelung (3) durch Extrusion hergestellt und an dem z. B vorgefertigten Leistenkern (2) angeordnet wird.

19. Verfahren nach einem der Ansprüche 13 bis 18, **dadurch gekennzeichnet, dass** für die Herstellung der Kunststoffummantelung (3), z. B. durch Extrusion, eine Ausgangsmischung umfassend einen thermoplastischem Kunststoff und ein chemisches Treibmittel verwendet wird, wobei der Anteil des chemischen Treibmittels in der Ausgangsmischung zumindest 0,01 Gew.-% beträgt, z. B. zumindest 0,02 Gew.-%, bevorzugt zumindest 0,05 %
und/oder der Anteil des chemischen Treibmittels in der Ausgangsmischung maximal 0,5 Gew.-% beträgt, z. B. maximal 0,3 Gew.-%, bevorzugt maximal 0,2 Gew.-%
und/oder der Anteil des chemischen Treibmittels in der Ausgangsmischung 0,01 bis 0,5 Gew.-% beträgt, z. B. 0,02 bis 0,3 Gew.-%, bevorzugt 0,05 bis 0,2 Gew.-%.

20. Verfahren nach Anspruch 19, **dadurch gekennzeichnet, dass** die Ausgangsmischung ein Nukleierungsmittel umfasst, z. B. unlösliche Metalloxide, unlösliche Metallsalze, Bornitrid, mineralische Füllstoffe, z. B. Talkum, synthetische Kieselsäure oder Kaolin.

21. Verfahren nach einem der Ansprüche 13 bis 20, **dadurch gekennzeichnet, dass** zwischen dem Leistenkern (2) und der Kunststoffummantelung (3) zumindest eine Zwischenschicht (7) angeordnet wird, insbesondere eine Haftvermittlerschicht (7), die z. B. durch Extrusion hergestellt wird, bevorzugt durch Coextrusion.

22. Verfahren nach Anspruch 21, **dadurch gekennzeichnet, dass** die Zwischenschicht (7) auf Basis eines Copolymers ausgebildet wird, bevorzugt auf Basis eines funktionellen Polyolefins, besonders bevorzugt auf Basis eines Vinylacetats, z. B. Ethylvinylacetat (EVA).

23. Verfahren nach einem der Ansprüche 13 bis 22, **dadurch gekennzeichnet, dass** an der Profilleiste (1) zumindest ein Abschlussprofil (8) angeordnet wird, bevorzugt ein Bodenabschlussprofil (8) an der Leistenunterseite und/oder ein Wandabschlussprofil (8) an der Leistenoberseite.

24. Verfahren nach Anspruch 23, **dadurch gekennzeichnet, dass** das zumindest eine Abschlussprofil (8) durch Extrusion hergestellt und an der Kunststoffummantelung (3) angeordnet wird, bevorzugt durch Coextrusion.
